# EUROPEAN PATENT APPLICATION

(11) **EP 4 814 749 A1**
(43) Date of publication of application: **30.09.2026**
(21) Application number: 26166448.6
(22) Date of filing: 20.03.2026
(51) Int. Cl.: G06F 16/9032, G06F 8/30

(54) **LEVERAGING A LARGE LANGUAGE MODEL FOR MODERNIZING A CODEBASE**

(30) Priority: 28.03.2025 US 202519094656
(71) Applicant: Microsoft Technology Licensing, LLC, Redmond, WA 98052 (US)
(72) Inventor: BOSKOVIC, Uros, Redmond, Washington, 98052 (US); BOZOVIC, Srdan, Redmond, Washington, 98052 (US); JEREMIC, Milan, Redmond, Washington, 98052 (US); VEZILIC, Ivan, Redmond, Washington, 98052 (US); DENG, Kai, Redmond, Washington, 98052 (US); OKS, Stanislav, Redmond, Washington, 98052 (US); TREVINO, Christopher Michael, Redmond, Washington, 98052 (US); CHUNG, Andrew Kwok-Chiang, Redmond, Washington, 98052 (US)
(74) Representative: CMS Cameron McKenna Nabarro Olswang LLP

(57) **Abstract**

Methods, apparatuses, and products for leveraging a large language model ('LLM') for modernizing a codebase, including: generating, using a codebase as input, a hierarchical representation of the codebase, wherein the hierarchical representation of the codebase includes one or more summarizations of functional units within the codebase and information describing relationships between the functional units within the codebase; and generating a searchable index that includes vector representations for nodes in the hierarchical representation of the codebase, wherein the LLM generates a response to a query based on content contained in the searchable index.

## Description

### BACKGROUND

Generative Artificial Intelligence (AI) refers to advanced AI systems that can create new content based on training data. One example of Generative AI is a Large Language Model (LLM). An LLM understands and generates human language by analyzing large amounts of textual data. An LLM may be trained on textual data from a variety of sources, such that the LLM can generate responses to user queries. Different types of textual data, however, can have different structure and nuances that are specific to a particular form of textual data. For example, while computer program code is textual data, it often has structure, dependencies between code segments, and other nuances that distinguish it from other forms of textual data (e.g., traditional prose). These differences between computer program code and other forms of textual data can present challenges when tasking an LLM with understanding, manipulating, generating, or otherwise managing computer program code.

LLMs struggle with processing computer program code because they traditionally parse text into fixed length chucks (e.g., 100 words) for processing. When applied to computer program code, however, this approach can split functional blocks (e.g., statements, functions, classes) across chunks, disrupting structure and causing dependencies between code segments to be lost.

### SUMMARY

According to embodiments of the present disclosure, various methods, apparatus, and products for leveraging an LLM for modernizing a codebase are described herein. In some aspects, leveraging an LLM for modernizing a codebase can include: generating, using a codebase as input, a hierarchical representation of the codebase, wherein the hierarchical representation of the codebase includes one or more summarizations of functional units within the codebase and information describing relationships between the functional units within the codebase; and generating a searchable index that includes vector representations for nodes in the hierarchical representation of the codebase, wherein an LLM generates a response to a query based on content contained in the searchable index. In some aspects, an apparatus may include a memory and one or more processing devices, operatively coupled to the memory, the one or more processing devices configured to perform similar steps. In some aspects, a computer program product comprising a computer readable storage medium may store computer program instructions that, when executed, perform similar steps.

### BRIEF DESCRIPTION OF DRAWINGS

Fig. 1 sets forth a block diagram of a system for leveraging an LLM for modernizing a codebase in accordance with some embodiments of the present disclosure.
Fig. 2 sets forth a method for creating a knowledge graph together with corresponding vector/text indexes from a codebase in accordance with some embodiments.
Fig. 3 sets forth an example of creating a knowledge base to support retrieval augmented generation (RAG) by an LLM in accordance with some embodiments.
Fig. 4 sets forth a diagram of a multi-agent architecture that may be used to support RAG by an LLM in accordance with some embodiments.
Fig. 5 sets forth a flow chart illustrating an example method of leveraging an LLM for modernizing a codebase in accordance with some embodiments of the present disclosure.
Fig. 6 sets forth a flow chart illustrating an additional example method of leveraging an LLM for modernizing a codebase in accordance with some embodiments of the present disclosure.
Fig. 7 sets forth a flow chart illustrating an additional example method of leveraging an LLM for modernizing a codebase in accordance with some embodiments of the present disclosure.
Fig. 8 sets forth a flow chart illustrating an additional example method of leveraging an LLM for modernizing a codebase in accordance with some embodiments of the present disclosure.
Fig. 9 sets forth a flow chart illustrating an additional example method of leveraging an LLM for modernizing a codebase in accordance with some embodiments of the present disclosure.
Fig. 10 sets forth an example of a computing device that may be used for some portion of securing an operating system in accordance with some embodiments.
Fig. 11 sets forth a block diagram of a cloud service provider service architecture in accordance with some embodiments of the present disclosure.
Fig. 12 sets forth a block diagram of an LLM in accordance with some embodiments of the present disclosure.

### DESCRIPTION OF EMBODIMENTS

To address the challenges that arise when tasking an LLM with processing computer program code, the present disclosure describes techniques to enhance an LLMs ability to comprehend, understand, generate, and manage computer program code (also referred to herein as 'code'). For example, techniques may be leveraged when parsing code (either for training, for augmenting retrieval, during generation, and so on) to help the LLM understand the structure of the code. Such techniques can include chunking code in a way that aligns with the structure of code. For example, rather than breaking the computer program code into fixed-length chunks, the embodiments described here can represent the computer program code as a tree, where each node in the tree represents some functional block. In fact, the hierarchy that exists in computer program code can be maintained in the tree. For example, each function that is included within a class may be a 'function node' that sits below a 'class node' in the tree.

By adapting an LLM for code comprehension, manipulation, generation, and overall management, new use cases may be enabled. One use case that can be enabled is the usage of LLMs for code modernization. Code modernization refers to the process of updating existing software systems to use current technologies, programming languages, and best practices. Code modernization can improve various aspects of a legacy software system, including its performance, scalability, security, and compatibility with modern technologies. Code modernization may be challenging as the size of a codebase expands, the engineers that authored code leave an enterprise, or other changes occur. To assist with code modernization, LLMs may be leveraged, but those LLMs should be adapted to understand, manipulate, generate, or otherwise manage computer program code, as described herein.

To modernize code using an LLM, a few techniques can be applied. First, a process use a legacy codebase as input and create output that can be used by an LLM. Such output can include, for example, one or more knowledge graphs that represent code elements as nodes and their relationships as edges. In the context of computer program code, the knowledge graph serves as an advanced representation that captures not only discrete code elements (such as functions, classes, variables, and modules) but also the complex interdependencies and structural relationships that exist among these elements. The output of this process can also include, for example, one or more vector indexes and/or text indexes that can be used later to retrieve relevant context (e.g., code snippets). After the legacy codebase has been represented in a form that is consumable by an LLM, a REST API or similar interface may be used to leverage the connections to the knowledge graph and indexes. In this example, when a query is made to the LLM, the system can use the graph database to pull relevant context and provide a high-fidelity response through a combination of RAG-based queries and LLMs.

Readers will appreciate that while code modernization is one use case for an LLM adapted for code processing, additional use cases exist. For example, the LLM may help developers or other users to learn about a codebase, query its content, find code to use as templates, identify dependencies within the codebase, or perform other tasks. In each case, however, by parsing the codebase in a manner that is mindful of the nuances and structure of computer program code, and packaging the codebase intelligently into formats that can be used by an LLM, the LLM can perform various functions related to understanding, manipulating, generating, or otherwise managing computer program code.

By using such LLMs, software development cycles may be shortened, allowing software developers to bring their products to the market more quickly. Likewise, software development costs may be reduced by minimizing the need for software developers or other personnel. These LLMs may also enable development teams to gain a deep understanding of a codebase in a short period of time, as well as providing a valuable resource when engaging in laborious projects such as modernizing a large codebase. These LLMs may also reduce errors relative to traditional development processes, as the LLM may help precent manual mistakes from human developers.

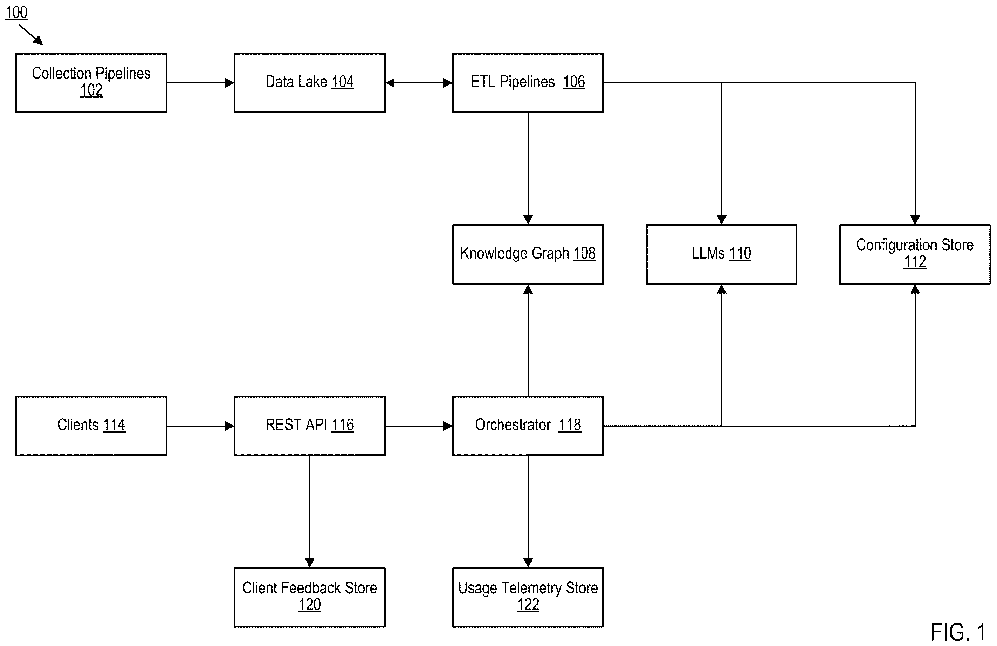

For further explanation, Fig. 1 sets forth a block diagram of a system 100 for leveraging an LLM for modernizing a codebase in accordance with some embodiments of the present disclosure. The system 100 depicted in Fig. 1 includes one or more collection pipelines 102 that can be used to gather information associated with a codebase. The collection pipelines 102 may be used to gather and aggregate diverse types of information associated with the codebase, where each collection pipeline includes a collection of components that are each responsible for handling specific data acquisition and processing tasks. Such modules may include, for example, data ingestion modules, parsing engines, metadata extractors, storage subsystems, and many others. In the example depicted in Fig. 1, the collection pipelines 102 can interface with various data sources, such as version control systems, documentation repositories, bug tracking systems, and continuous integration/continuous deployment (CI/CD) pipelines, and others. As such, the collection pipelines 102 may be used to retrieve source code, code documentation, and other information associated with the codebase. In this example, the collection pipelines 102 may store the information that they collect in a data lake 104.

The system 100 depicted in Fig. 1 also includes extract, transform, and load (ETL) pipelines 106 that will be described in greater detail below. The ETL pipelines 106 may be embodied, for example, to as one or more preprocessing pipelines that are used to convert code repositories into a knowledge graph 108 that may be stored in graph database. The ETL process may begin with the extraction phase, where source code files, metadata, commit histories, or related documentation are retrieved from various code repositories. Following extraction, the ETL pipelines 106 process generate the nodes and relationships that form a knowledge graph. This may involve parsing the code to identify functions, classes, modules, and their interdependencies, as well as applying natural language processing (NLP) techniques to analyze comments and documentation. The ETL pipelines 106 may then insert the transformed data into a graph database, where entities are represented as nodes and relationships as edges. This graph structure enables efficient querying, visualization, and analysis of complex interconnections within the codebase. In the embodiment depicted in Fig. 1, the ETL pipelines 106 may even feed data into the LLMs 110 or a configuration store 112.

The system 100 depicted in Fig. 1 also includes clients 114 that interact with an orchestrator 118 via one or more representational state transfer application programming interfaces (REST APIs) 116. As will be described in greater detail below, the orchestrator 118 may leverage the connections to the knowledge graph 108 and LLM 110 calls to answer user queries that are submitted from clients 114 via the REST APIs 116.

The system 100 depicted in Fig. 1 also include a client feedback store 120 as well as a usage telemetry store 122. The client feedback store 120 may be embodied, for example, as a data repository that includes client feedback to the responses produced by the LLM, or client feedback to some other output generated by the system 100. The usage telemetry store 122 may be embodied, for example, as a data repository that includes telemetry data associated with the responses produced by the LLM, or telemetry data associated with some other output generated by the system 100.

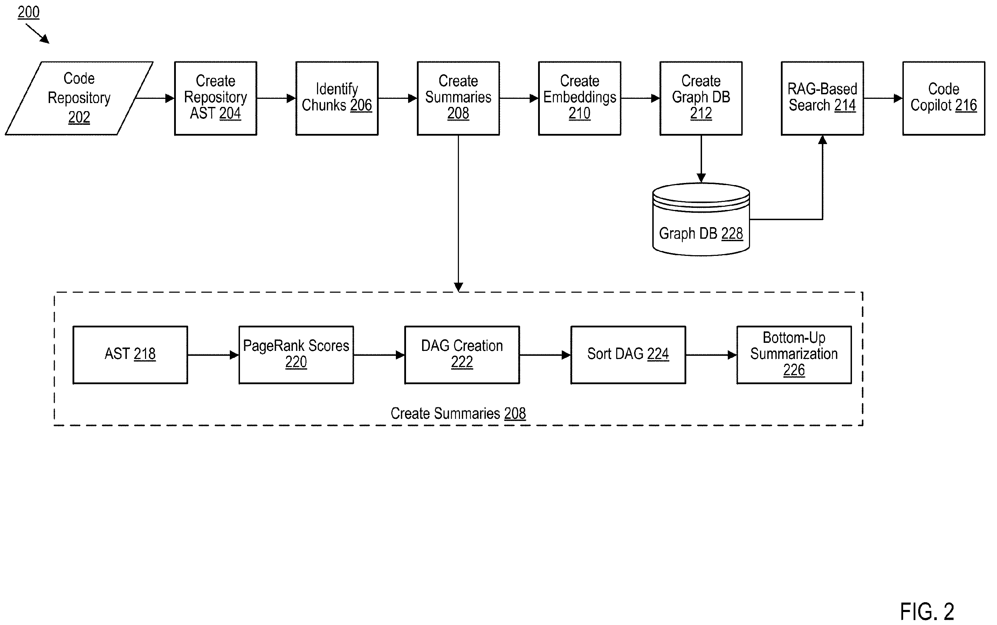

For further explanation, Fig. 2 sets forth a method 200 for creating a knowledge graph together with corresponding vector/text indexes from a codebase in accordance with some embodiments. The example depicted in Fig. 2 includes creating a repository abstract syntax tree (AST) 204 from content contained in a code repository 202. The method 200 begins with creating repository level ASTs from the files in code repository 202. This allows all code blocks (e.g., statements, variables, functions, classes etc.) and relationships between those code blocks to be identified. The ASTs may be created, for example, using lexical analysis to tokenize the code into meaningful syntactic units. Tokenizing the code can include, for example, using a lexer to scan source code to identify operators, identifiers, literals, or other language-specific symbols. Following lexical analysis, the tokens may undergo syntactic analysis such that an AST may be constructed by organizing tokens into a hierarchical tree structure that reflects the syntactic relationships and nested constructs within the source code.

The example depicted in Fig. 2 also includes identifying chunks 206 and creating summaries 208 of each of the identified chunks 206. To generate a high-quality summary for each code block, the embodiments described here may leverage code structure and relationships between code blocks, including those expressed in the ASTs. One or more nodes in the ASTs may be identified as distinct chunks, and each code block may be summarized using all its dependencies, for example, by transforming the ASTs to DAGs. This transformation enables the representation of shared substructures or common dependencies across different parts of the code, which is not possible in a strictly tree-based format like an AST. To transform an AST into a DAG, subtrees or nodes that represent semantically equivalent code structures may be identified, and these redundant nodes may be merged to create shared nodes in the DAG.

As part of this transformation from an AST to a DAG, each node in an AST may get PageRank score and the edge weight may be determined as an absolute difference between the PageRank score of nodes. All nodes may then be copied to the new DAG, where protected edge types are added first, such as parent/child edges. Edges may be sorted based on score, such that edges with the largest PageRank difference are added first. If the edge brings cycle to the graph, it is skipped. Once the DAG is created, a topological sort may be performed and a bottom-up (hierarchical) summarization for each code block may be done by considering all dependencies. The use of PageRank scores in this context helps quantify the importance of each node within the DAG, aiding in tasks such as code optimization, dependency analysis, or prioritization of code segments for further processing. In Fig. 2, creating summaries 208 can therefore involve taking an AST 218, identifying PageRank scores 220, creating a DAG 222, sorting the DAG 224, and performing a bottom-up summarization 226, as described here as well as below.

Once the summaries have been created, the system may create embeddings 210 that are mathematical representations of the summaries (and potentially other information associated with a particular node). The system may further create a graph database 212 (stored in the graph database 228) that can be used for RAG-based search 214 so that results can be fed to a code copilot 216, as described in greater detail below.

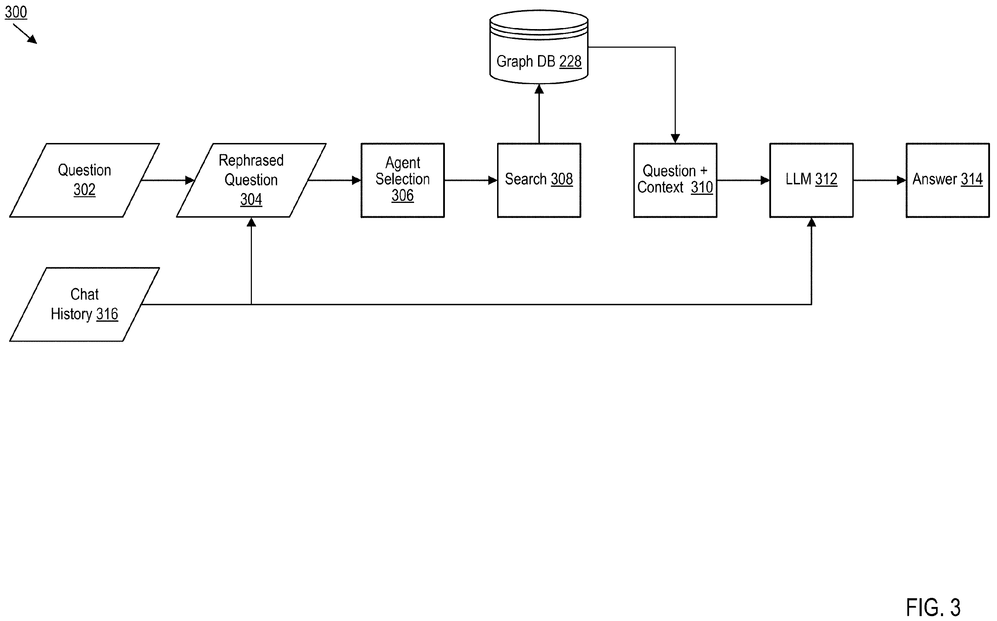

In the example of Fig. 3, each summary that is created may contain information about a particular code block (often a code block that corresponds to a node in the AST). The summary may include, for example, information describing any dependencies between the code block and other code blocks, functions, classes, and the like. The summary may also include information describing the purpose of the code block, inputs received, output generated, or any other information that may be useful in describing what functionality is performed by the code block. In fact, because a vector representation of the summary will ultimately be created and stored in a vector database that is used by an LLM or other generative AI, the summary may contain any information that may be useful when searching for the vector database for code blocks that are similar to code described in some input query to the LLM.

For further explanation, Fig. 3 sets forth an example process 300 of creating a knowledge base to support retrieval augmented generation (RAG) by an LLM in accordance with some embodiments. The example in Fig. 3 includes receiving a question 302 (i.e., the query that is submitted to the LLM) and generating a rephrased question 304. The rephrased question 304 may be enhanced using the chat history to rephrase the question 302 in context. Readers will appreciate that when an LLM receives a query, it can utilize the chat history to rephrase the question in a manner that enhances clarity, context, and relevance. This process begins by analyzing the chat history to identify key topics, user preferences, and the conversational context that may influence the meaning of the current query. The model applies natural language understanding techniques to extract relevant semantic information from the chat history, allowing it to disambiguate terms, resolve pronouns, and fill in implicit details that the user may have omitted.

The example depicted in Fig. 3 includes an agent selection 306 process. As will be described in greater detail below, a multi-agent architecture may be deployed to optimize the RAG process. Each agent within this architecture may be specialized to handle different types of queries, based on criteria such as subject matter, data source, query complexity, or domain-specific knowledge. When a query is received, an agent selection mechanism (described later) may leverage classification algorithms or heuristic rules to evaluate the query's characteristics and determine the most appropriate agent for processing. Once the agent selection 306 process has been completed, a search 308 of the graph database 228 may be conducted. This search can involve, for example, creating a vector representation of the query and searching one or more vector indexes in 228 to identify relevant entries. The relevant entries may be retrieved and provided 310 to the LLM 312 along with chat history 316, such that the LLM 312 can generate answer 314 (i.e., a query response) that has been augmented with information retrieved from the graph database 228.

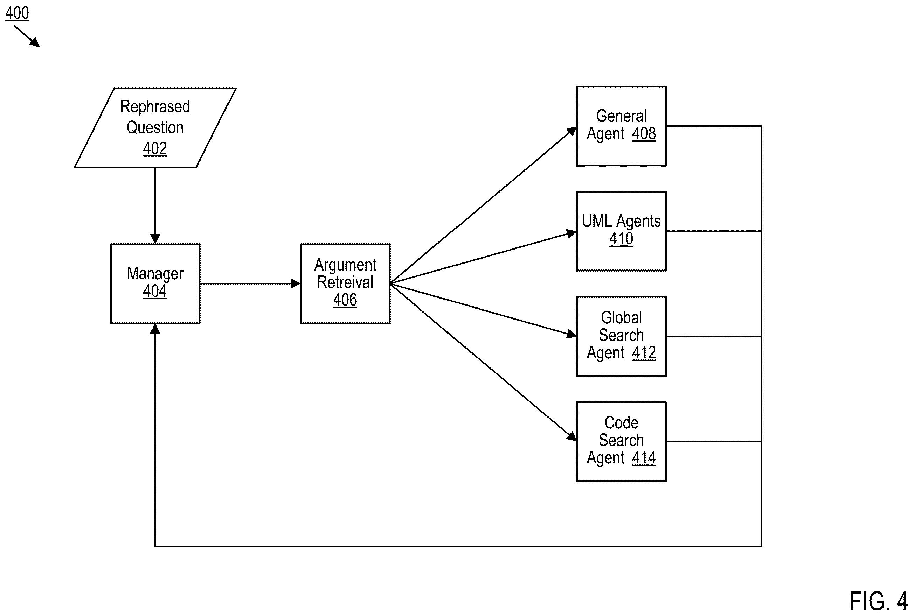

For further explanation, Fig. 4 sets forth a diagram of a multi-agent architecture 400 that may be used to support RAG by an LLM in accordance with some embodiments. In Fig. 4, a rephrased question 402 as described above is received by a manager 404. The system depicted in Fig. 4 includes multiple agents, where each agent can potentially focus on different types of questions and can take different arguments as inputs. The manager 404 can oversee both selecting the proper agents, and also extracting the corresponding arguments such as class name from the user question. Each agent can invoke different tools/skills to help solve the user question, such as generating a diagram, extracting relevant source code, and so on. As such, the system depicted in Fig. 4 includes an argument retrieval 406 module.

In Fig. 4, the system includes a few example agents, although fewer or additional agents may also be included in some embodiments. Fig. 4 includes a general agent 408, a Unified Modeling Language (UML) agent 410, a global search agent 412, and a code search agent 414. The general agent 408 may be responsible for general code understanding questions, and may be configured to perform a vector search based on hierarchical summaries, to fetch relevant relationships and nodes as context for an LLM call. The UML agent 410 can be used to perform vector search based on function and classes names, such that the UML agent 410 retrieves the most relevant function or class and relationships needed for drawing sequence or class diagram. The UML agent 410 would have UML diagram creation skill and skill for rendering source code. The global search agent 412 may be responsible for answering high level questions about the codebase over hierarchical communities. The global search agent 412 may process all communities at specified hierarchical level by leveraging map/reduce prompts. Communities may be processed in batches to create intermediate answers using LLM calls with map prompts. Intermediate answers may be processed with a 'reduce' prompt to generate a final answer. The code search agent 414 may perform vector search over vector indexes that are created using only code. For the most similar nodes in graph, it can also retrieve additional context using graph search.

Readers will appreciate that in other embodiments, other agents may be included. For example, a translator agent may be included in the systems described herein. In some embodiments, the translator agent is configured to translate code from a source programming language to a target programming language. The translator agent may perform such as translation, for example, by initially parsing and analyzing the source code using language-specific parsers or other mechanism to extract syntactic and semantic information about the source code. The source code may subsequently be converted into an intermediate representation (IR) that abstracts language-specific constructs while preserving control flow, data structures, and functionality. The translator agent may then (e.g., using predefined translation rules, machine learning models, rule-based compilers) generate functionally equivalent code in the target programming language. The translated code may even be optimized for performance or some other objective. In fact, in some embodiments, the translator agent (or some other agent) may perform tests to compare outputs between the source code and target code, as part of an effort to validate accuracy. In some embodiments, a human-in-the-loop approach may be leveraged where the translator agent generates an initial translation that is subsequently reviewed and refined by a human operator. The translator agent may operate autonomously or in coordination with other agents within the system to enable seamless interoperability between different programming environments. In other embodiments, additional agents may be included that carry out other functionality such as, for example, code transformation agents, agents that help with integrations with other tools (e.g., take some code and create the necessary integrations to make the code work with Microsoft Visual Studio), and other agents.

Readers will appreciate that one or more embodiments of the present disclosure may differ from retrieval-augmented generation (RAG) approaches that rely solely on vector-based retrieval. In contrast, embodiments herein utilize both semantic vector-based searches and structural graph relationships within the knowledge graph. By combining vector embeddings and explicit relationships represented in the knowledge graph, the described approach can perform retrieval-augmented generation that leverages both semantic similarity and explicit structural context, thus providing more accurate and context-rich responses.

Unlike some RAG systems, which may use only vector embeddings for retrieval, one or more embodiments described herein may specifically leverage a knowledge graph in combination with vector retrieval. The knowledge graph contains nodes and explicit structural relationships (e.g., dependency, inheritance, functional calls) of code elements, which are queried alongside vector similarity searches. Consequently, the described architecture enriches the LLM's response by providing context from both semantic (vector-based) and structural (graph-based) sources.

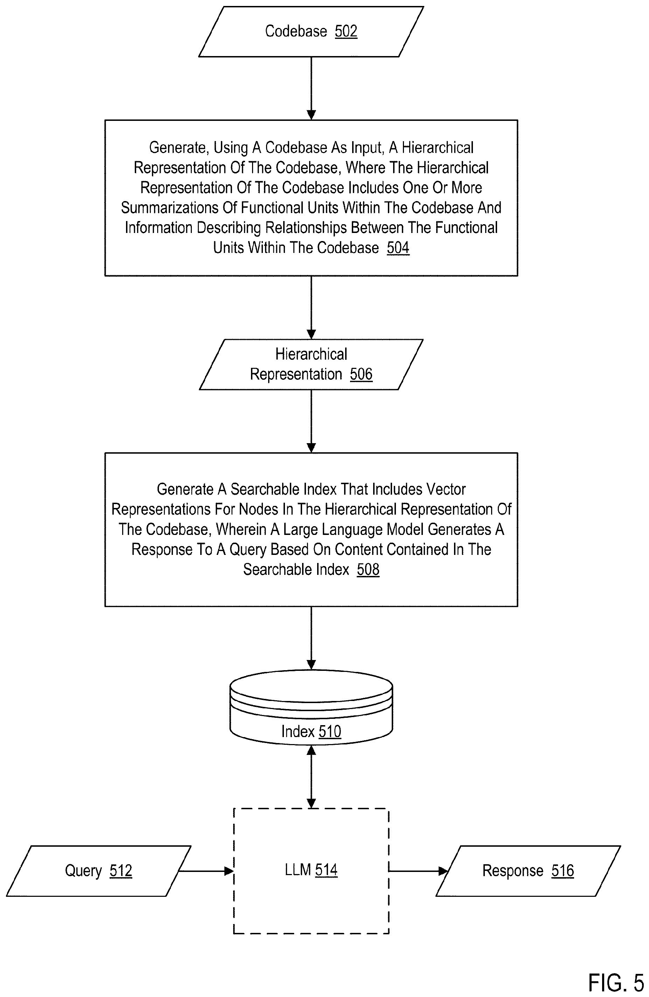

For further explanation, Fig. 5 sets forth a flow chart illustrating an example method of leveraging an LLM for modernizing a codebase in accordance with some embodiments of the present disclosure. The example method depicted in Fig. 5 may be carried out using the systems described above and below, including combinations of such systems and combinations of the components in the systems that are described elsewhere in the present disclosure.

The example method depicted in Fig. 5 includes generating 504, using a codebase 502 as input, a hierarchical representation 506 of the codebase 502. The hierarchical representation 506 is a data structure that can organize elements in a multi-level, parent-child relationship. The higher-level entities may encapsulate or reference lower-level entities in a structured manner. This type of representation enables the modeling of complex relationships between components, making it particularly useful for applications that require an understanding of dependencies, inheritance, or control flow. Hierarchical representations can be implemented in various forms, including trees, nested lists, and directed acyclic graphs (DAGs).

When representing computer code such as the contents of the codebase 502, hierarchical representations like DAGs can be used to model various aspects of code snippets, including control flow, data flow, and syntactic structure. For example, in the context of a control flow graph, each node might represent a code statement or block, while edges represent the possible execution paths between these statements. Similarly, in a data flow graph, nodes can correspond to operations or variables, with edges indicating the flow of data between operations.

Generating 504, using a codebase 502 as input, the hierarchical representation 506 of the codebase 502 may be carried out using techniques as described above. In some embodiments, generating 504 the hierarchical representation 506 of the codebase 502 can initially include creating the codebase 502 level ASTs from files in the codebase 502. An AST is a hierarchical, tree-like data structure used to represent the syntactic structure of computer program code that is included in the codebase 502. Each node in the AST may correspond to a construct occurring in the source code, such as expressions, statements, operators, control flow structures, and so on. The AST may capture the logical organization of the code, abstracting away syntactic details to focus on the structural and semantic relationships between program components.

To represent code as an AST, the source code may be parsed (by a parser) to process the code according to the grammar of the programming language. The parser may identify syntactic constructs and organize them into nodes and branches, forming the tree structure. For example, in an assignment statement like x = a + b, the root node might represent the assignment operation (=), with child nodes representing the left-hand variable (x) and the right-hand expression (a + b). The expression itself could be further broken down into an operator node (+) with child nodes for each operand (a and b).

Once the ASTs have been created, generating 504 the hierarchical representation 506 of the codebase 502 can continue by creating hierarchical summarizations. To generate a high quality summary for each code block, the embodiments described here may leverage code structure and relationships between code blocks, including those expressed in the ASTs. Each code block may be summarized using all its dependencies, for example, by transforming the ASTs to DAGs. Transforming an AST to a DAG may involve restructuring the hierarchical tree-based representation of program code into a graph where nodes can have multiple parent nodes, provided that no cycles are introduced. This transformation enables the representation of shared substructures or common dependencies across different parts of the code, which is not possible in a strictly tree-based format like an AST. To transform an AST into a DAG, subtrees or nodes that represent semantically equivalent code structures may be identified, and these redundant nodes may be merged to create shared nodes in the DAG.

As part of this transformation from an AST to a DAG, each node in an AST may get PageRank score and the edge weight may be determined as an absolute difference between the PageRank score of nodes. All nodes may then be copied to the new DAG, where protected edge types are added first, such as parent/child edges. Edges may be sorted based on score, such that edges with the largest PageRank difference are added first. If the edge brings cycle to the graph, it is skipped. Once the DAG is created, a topological sort may be performed and a bottom-up (hierarchical) summarization for each code block may be done by considering all dependencies. The use of PageRank scores in this context helps quantify the importance of each node within the DAG, aiding in tasks such as code optimization, dependency analysis, or prioritization of code segments for further processing.

The example method depicted in Fig. 5 also includes generating 508 a searchable index 510 that includes vector representations for nodes in the hierarchical representation 506 of the codebase 502. The vector representations may be embodied, for example, as vector embeddings (i.e., mathematical representations) designed to capture the semantic or structural properties of data in a format that can be efficiently processed by machine learning algorithms. Such vector representations can be used to capture the semantic and structural properties of the hierarchical representation 506 of the codebase 502 by encoding features like node types, relationships, and contextual dependencies into dense numerical vectors. The process of generating such representations may involve traversing the hierarchical representation to extract meaningful features. For example, in the case of a DAG, node features may be aggregated using message-passing algorithms that account for both the node's attributes and its connections, ultimately producing a vector that encapsulates the codebase's 502 structural and functional characteristics. Once generated, these vector representations can be stored in a vector database, a traditional database, or some other repository. Readers will appreciate that vector representations can be created for each hierarchical summary. Furthermore, vector representations can be created for other node properties as well (e.g., code block name, source code, etc.). In some embodiments, each code block in the codebase's 502 AST can become a node in graph database, while relationships between code blocks become edges. Embeddings, summaries, file path, code block name, code and other relevant pieces of information may be kept as node properties in the graph database. As such, multiple embeddings may exist for the same code block such that embodiments can therefore have multiple vector indexes.

In the example depicted in Fig. 5, an LLM 514 generates a response 516 to a query 512 based on content contained in the searchable index 510. When the query 512 is initially received, it may be processed (e.g., by one or more LLMs) to generate an embedding that captures the semantic meaning of the query 512. The resulting query vector may subsequently be used to identify the most relevant (e.g., similar) entries in the searchable index 510. After retrieving the relevant vectors, the LLM 514 may integrate the corresponding information into its response generation process. The response generation process can involve several strategies, ultimately resulting in the LLM 514 synthesizing the retrieved information with its own knowledge base and applying natural language generation techniques to produce a coherent, contextually accurate response 516 to the query 512.

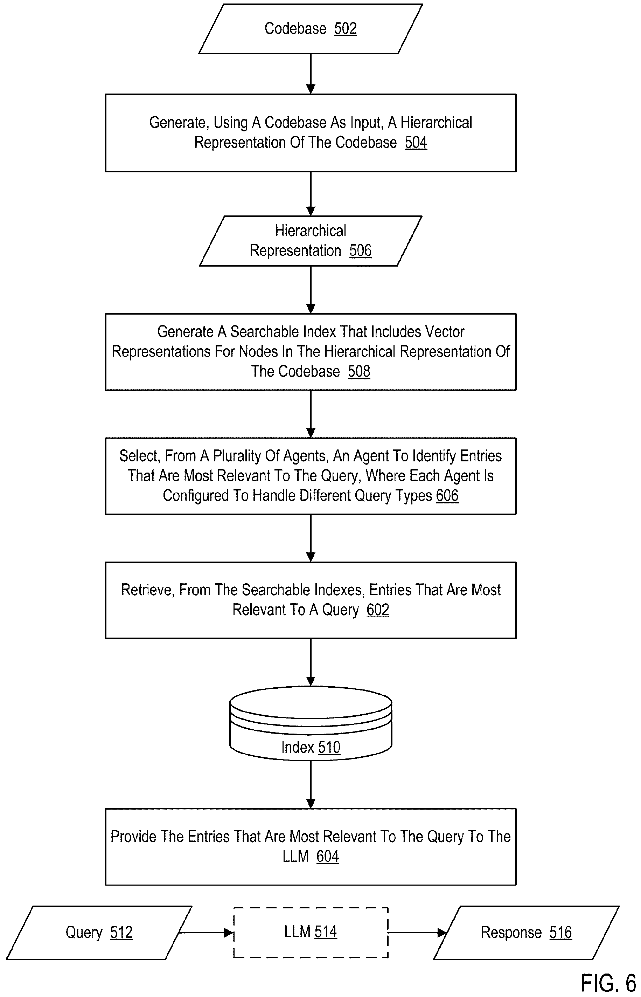

For further explanation, Fig. 6 sets forth a flow chart illustrating an additional example method of leveraging an LLM for modernizing a codebase in accordance with some embodiments of the present disclosure. The example method depicted in Fig. 6 may be carried out using the systems described above and below, including combinations of such systems and combinations of the components in the systems that are described elsewhere in the present disclosure.

The example method depicted in Fig. 6 includes retrieving 602, from the searchable index 510, one or more entries that are most relevant to the query 512. Retrieving 602 one or more entries that are most relevant to the query 512 from the searchable index 510 may be carried out, for example, by initially converting the query 512 into a vector representation using an embedding model. This vector representation can capture the semantic meaning of the query, enabling comparison with other vectors stored in a vector database (e.g., the searchable index 510). A similarity search, using an algorithm such as approximate nearest neighbor (ANN) search or other algorithm, may be carried out to identify entries in the searchable index 510 that are most semantically similar to the query vector. Upon identifying such entries, the entries may be retrieved from the searchable index along with their associated metadata, such as the original text, source information, or confidence scores. These entries may then be formatted and passed to the LLM as part of an input prompt. As such, the example method depicted in Fig. 6 also includes providing 604 the one or more entries that are most relevant to the query 512 to the LLM 514.

The LLM 514 may integrate the retrieved information into its generation process in a variety of ways, including by incorporating the retrieved information into the LLM's context window as part of the prompt. In some implementations, the LLM may even weigh the retrieved information differently, prioritizing content that closely aligns with the query or the model's internal knowledge. Instead of relying on its pre-trained knowledge, which may be static or outdated, the LLM 514 may therefore leverage domain-specific information (e.g., information extracted from the codebase 502) to deliver responses 516.

The example method depicted in Fig. 6 also includes selecting 606, from a plurality of agents, an agent to identify entries that are most relevant to the query 512. As described elsewhere in the present application, some embodiments may include a multi-agent architecture to optimize the retrieval process when enabling an LLM with RAG. Each agent within this architecture may be specialized to handle different types of queries, based on criteria such as subject matter, data source, query complexity, domain-specific knowledge, or some other criteria (including combinations thereof). When a query is received (and potentially rephrased), an agent selection mechanism can evaluate the query's characteristics to determine the most appropriate agent for processing. The selected agent may then identify and retrieve relevant content from designated knowledge sources, such as one or more vector databases. This retrieved content is subsequently provided to the LLM 514 to enhance its generation capabilities, ensuring that responses are both contextually relevant and factually accurate.

Readers will appreciate that by delegating query processing to specialized agents, the system may improve retrieval precision, as each agent can be optimized for a specific type of information or dataset. This specialization can also reduce the load on the LLM 514, allowing it to focus on synthesis and generation rather than retrieval. Moreover, the architecture supports scalability and modularity, enabling the addition of new agents to accommodate new data types or query patterns without overhauling the entire system.

Selecting 606, from a plurality of agents, an agent to identify entries that are most relevant to the query 512 may be carried out in a variety of ways. For example, selecting 606 an agent to identify entries that are most relevant to the query 512 may begin by analyzing the query 512 (including rephrased versions thereof) to determine the most suitable agent to handle the request using a query classification, routing mechanism, or some other mechanism that assesses the query's characteristics to select the appropriate agent. For example, a machine learning model trained on labeled query data can predict the query's category, mapping it to the corresponding agent. Alternatively, rule-based systems can be used, where specific keywords, syntactic structures, metadata, or some other data triggers the routing logic. In some embodiments, the logic that actually selects 606 an agent may be included in a distinct module within the system.

In the example depicted in Fig. 6, each agent is configured to handle different query types. Once the appropriate agent is selected, the query is handed off for processing such that the agent may initiate a retrieval operation against a specific vector database, apply domain-specific augmentation techniques, or even coordinate with other agents if the query spans multiple domains. The retrieved information be forwarded to the LLM 514, along with chat history and other information, for final response generation. In some cases, multiple agents may collaborate, each contributing relevant information, which is then aggregated and synthesized by the LLM 514.

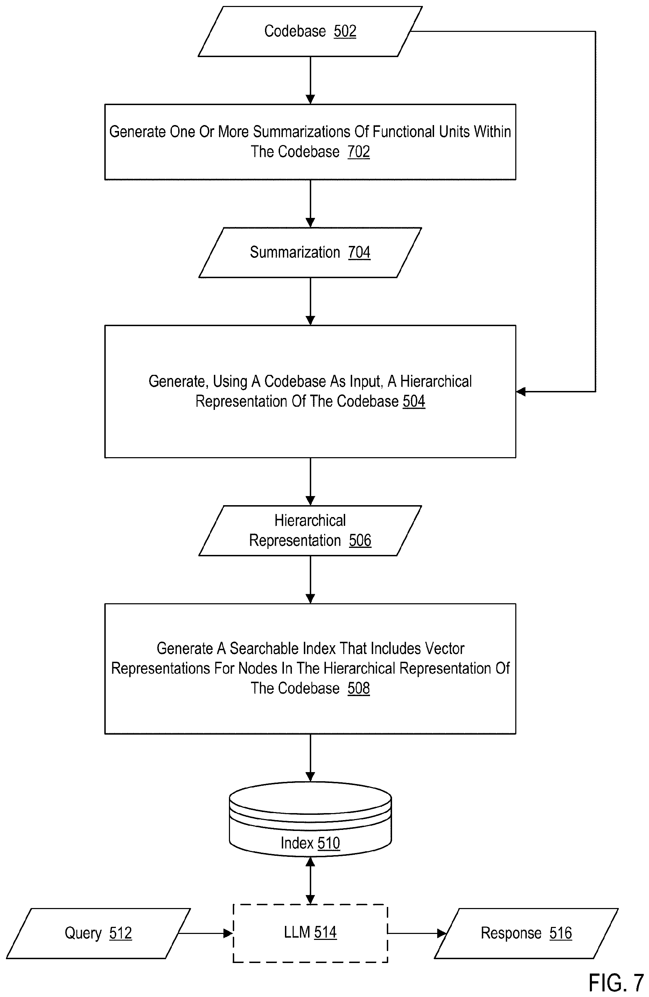

For further explanation, Fig. 7 sets forth a flow chart illustrating an additional example method of leveraging an LLM for modernizing a codebase in accordance with some embodiments of the present disclosure. The example method depicted in Fig. 7 may be carried out using the systems described above and below, including combinations of such systems and combinations of the components in the systems that are described elsewhere in the present disclosure.

The example method depicted in Fig. 7 includes generating 702 one or more summarizations 704 of functional units within the codebase 502. Generating 702 one or more summarizations 704 of functional units within the codebase 502 may be carried out, for example, by performing a hierarchical summarization process to generate high-quality summaries for individual code blocks by leveraging the inherent structure of the source code. Such a process may begin, for example, by representing the code as an AST and computing a score for each node in the AST which quantifies the relative importance of each node (and therefore their respective code elements). These scores may be used to determine the strength of relationships between nodes. Critical relationships (e.g., parent/child connections) between nodes may be preserved first in a DAG representation of the codebase, with remaining connections selectively added in order of significance. A topological sort of this DAG may be performed to provide an ordered sequence that respects the dependency structure, and a bottom-up, hierarchical summarization may finally be performed so that each code block's summary reflects both its local details and its broader interdependencies. Additional details are included below.

In the example depicted in Fig. 7, multiple summarizations 704 may be generated 702 for each functional unit within the codebase 502. Each summarization 704 may include different content that conveys different information about a functional unit within the codebase 502. For example, a first summarization may include only information describing the code in a particular functional unit whereas a second summarization may include information describing the file name that the code is contained in, information describing what class the code is a member of, information describing what libraries are leveraged by the code, and so on. In such a way, each summarization can represent some distinct collection of information that may be used to convey information about the functional unit. In other embodiments, one or more summarizations can include information describing third-party dependencies, internal dependencies, structural information (e.g., which class, module, or namespace the code belongs to), a high-level summary of what functionality the code is designed to carry out, information describing the hierarchy of calls in the code (including upstream and downstream calls), information describing how data flows through the code, information describing the control flow of the code, information describing how errors are handled, version and commit history information, information describing the contents of comments within the code, information obtained from documentation associated with the code, security-related information, performance-related information, and many other types of information. Readers will appreciate that a particular summarization may include one or more distinct types of information, including combinations of multiple types of information.

Readers will appreciate that because many different types of summarizations may be created, many different searchable indexes may also be created. For example, a first index may be created that includes vector representations for a first type of summarization of each functional unit in the codebase 502, whereas a second index may be created that includes vector representations for a second type of summarization of each functional unit in the codebase 502. While the searchable indexes may be distinct, because a hierarchical representation of the codebase 502 has been generated 504, the various entries in various indexes for a particular functional unit in the codebase 502 may be linked together via the hierarchical representation of the codebase 502. Consider an example in which function A in the code base is associated with the vector A¹ in a first vector index and also associated with vector A² in a second vector index. In such an example and as described above, the hierarchical representation of the codebase 502 would include a node for function A. In this example, the node for function A may also include metadata indicating that its function is associated with vector A¹ in the first vector index and also associated with vector A² in the second vector index.

Although FIG. 6 and FIG. 7 illustrate methods of generating hierarchical summarizations from the AST representation, embodiments described herein explicitly include the entire AST in the knowledge graph. Specifically, each node of the AST representing discrete code elements (e.g., statements, variables, functions, classes) and all structural relationships between these elements are fully captured and stored as nodes and edges in the knowledge graph. Thus, the knowledge graph maintains complete structural information of the codebase, while the hierarchical summarizations derived from the AST or DAG representations primarily support retrieval-augmented generation (RAG) operations.

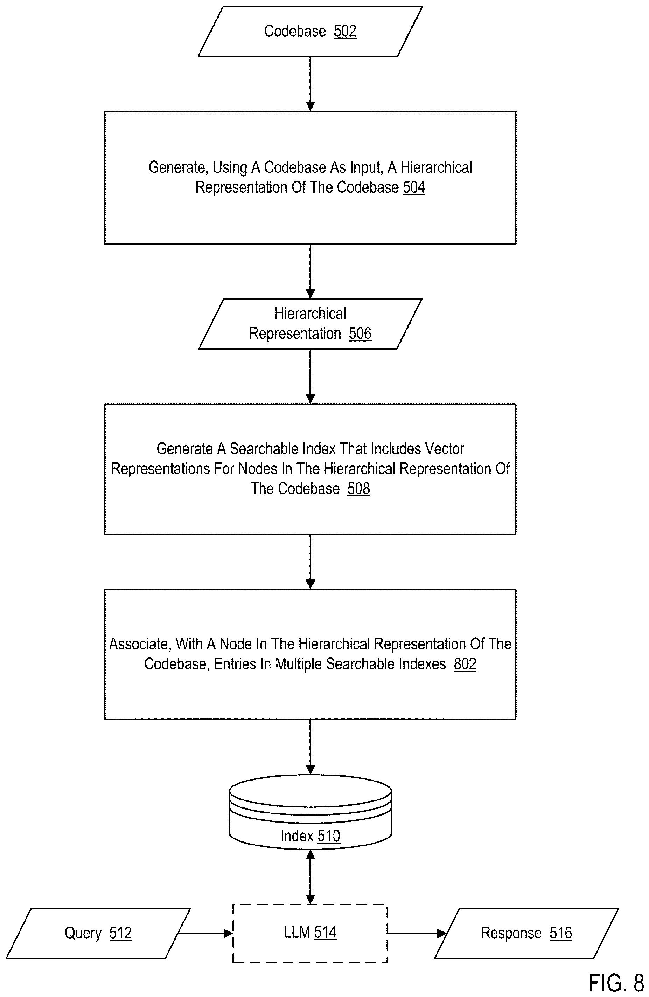

For further explanation, Fig. 8 sets forth a flow chart illustrating an additional example method of leveraging an LLM for modernizing a codebase in accordance with some embodiments of the present disclosure. The example method depicted in Fig. 8 may be carried out using the systems described above and below, including combinations of such systems and combinations of the components in the systems that are described elsewhere in the present disclosure.

The example method depicted in Fig. 8 also includes associating 802, with a node in the hierarchical representation 506 of the codebase 502, entries in multiple searchable indexes. In the hierarchical representation 506 of the codebase 502, each node encapsulates a code element along with its various attributes and relationships. Recognizing that a single code element can be understood from multiple perspectives, the system generates different summarizations for each node. For example, one summarization might capture detailed syntactic and structural information, while another may highlight high-level functionality or conceptual intent. Each of these summarizations is then transformed into a unique vector embedding using dedicated models or configurations tailored to the specific type of information being emphasized.

These distinct embeddings may be indexed separately in multiple searchable vector indexes, with each index optimized to highlight a particular aspect of the node's summarization. This multi-index strategy allows the system to support diverse query types, thereby enabling it to retrieve the most relevant results whether the query 512 is aimed at understanding, for example, the intricate code structure or seeking a high-level overview of the functionality.

When a query 512 is received, the system leverages these multiple indexes to fetch relevant entries associated with a single node. By comparing the query's embedding with those from the different indexes, the system can determine which aspect of the node (e.g., structural, functional, or contextual) is most pertinent to the query 512. This flexible retrieval mechanism enhances the precision and relevance of a response 516.

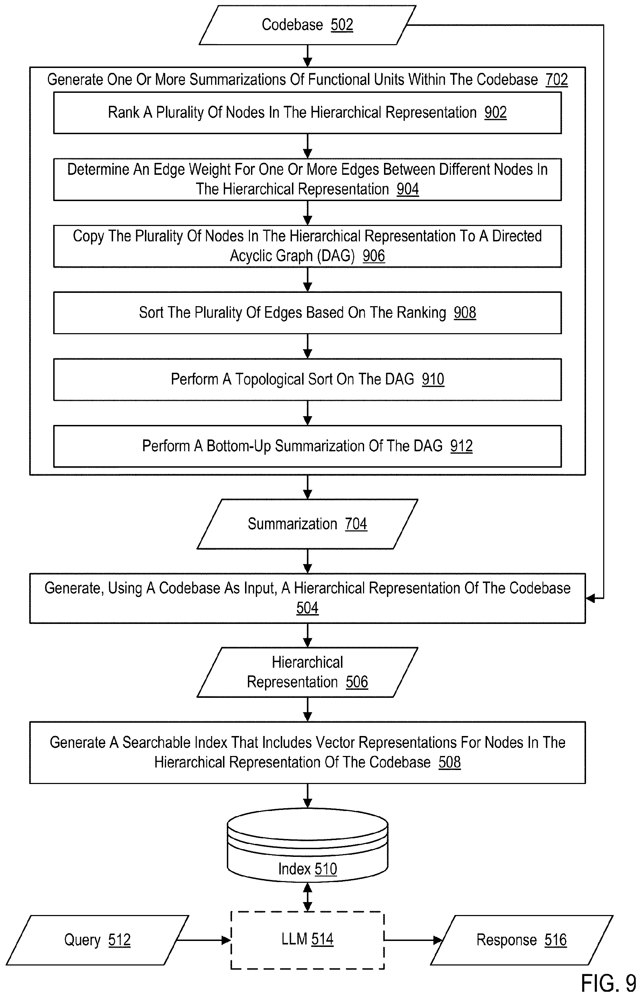

For further explanation, Fig. 9 sets forth a flow chart illustrating an additional example method of leveraging an LLM for modernizing a codebase in accordance with some embodiments of the present disclosure. The example method depicted in Fig. 9 may be carried out using the systems described above and below, including combinations of such systems and combinations of the components in the systems that are described elsewhere in the present disclosure.

In the example depicted in Fig. 9, generating 702 one or more summarizations 704 of functional units within the codebase 502 includes ranking 902 a plurality of nodes in the hierarchical representation 506. Ranking 902 the plurality of nodes in the hierarchical representation 506 may be carried out, for example, by assigning a PageRank score for each node. The PageRank score may represent a quantitative measure of the relative importance of nodes within the hierarchical representation 506. The PageRank algorithm may be used to assign a numerical weight to each node based on the structure of the hierarchical representation 506, such that the importance of a given node is determined by the number and/or quality of incoming links from other nodes in the hierarchical representation 506. More specifically, the PageRank score for a particular node may be computed by summing the contributions from all nodes that link to it, with a damping factor applied to account for the probability that a traversal will continue from one node to the next.

In the example depicted in Fig. 9, generating 702 one or more summarizations 704 of functional units within the codebase 502 also includes determining 904 an edge weight for one or more edges between nodes in the hierarchical representation 506. Determining 904 an edge weight for a particular edge between nodes in the hierarchical representation 506 may be carried out, for example, by calculating the absolute difference between the respective PageRank scores of the nodes that are connected by the particular edge. Because a larger difference in scores between two connected nodes suggests a more pronounced disparity in importance, this may be indicative of a critical dependency, a transition within the code, or some other critical relationship between the nodes.

In the example depicted in Fig. 9, generating 702 one or more summarizations 704 of functional units within the codebase 502 also includes copying 906 the plurality of nodes in the hierarchical representation to a DAG, wherein one or more protected edges are added before one or more non-protected edges, and wherein the one or more protected edges include parent/child edges. Such protected edges may represent non-negotiable relationships between nodes, such as a parent/child relationship, that help maintain the essential hierarchical relationships inherent in the original code structure. Following the addition of protected edges, the remaining edges may be sorted in descending order based on their computed weights. As such, generating 504 the hierarchical representation 506 of the codebase 502 also includes sorting 908 the plurality of edges based on the ranking. The edges with the largest PageRank differences may be sequentially added to the new graph. During this process, however, each edge is evaluated to ensure that its inclusion does not introduce a cycle into the graph. The resultant structure is a DAG that retains the critical dependencies (e.g., from the original AST) while emphasizing connections that indicate significant differences in node importance.

In the example depicted in Fig. 9, generating 702 one or more summarizations 704 of functional units within the codebase 502 also includes performing 910 a topological sort on the DAG. A topological sort is an ordering of the nodes in the DAG that ensures that every directed edge from node A to node B has node A appearing before node B, thereby respecting all dependency relationships. Performing 910 a topological sort on the DAG may be carried out, for example, by carrying out algorithms such as Kahn's algorithm to perform a linear ordering of vertices in the DAG, thereby ensuring that if there is an edge from one node to another node in the DAG, the source node comes before the target node in the ordering.

In the example depicted in Fig. 9, generating 702 one or more summarizations 704 of functional units within the codebase 502 also includes performing 912 a bottom-up summarization of the DAG. With the DAG ordered as described above, a bottom-up summarization may be performed such that each code block is summarized by incorporating not only its intrinsic content, but also the summaries of all nodes it depends on. For example, for nodes with no dependencies (e.g., typically the leaves of the DAG), individual summaries are generated and then progressively merged as the process moves upward through the hierarchy. This hierarchical, bottom-up summarization approach ensures that the summaries for higher-level code blocks comprehensively capture both their own details and the context provided by their dependent substructures, leading to context-aware summaries at each level in the hierarchical representation 506 of the codebase 502.

Readers will appreciate that, as described above, the hierarchical representation 506 of the codebase 502 includes information describing relationships between the functional units within the codebase. In some embodiments, the information describing relationships between the functional units within the codebase includes information describing communities of nodes in the hierarchical representation 506 of the codebase 502. A community, as the term is used here, may represent a collection of nodes in the hierarchical representation 506 of the codebase 502 that are more densely connected to each other than to the rest of the nodes in the hierarchical representation 506 of the codebase 502. Communities can be used in graph theory to identify clusters or groups of nodes that share similar characteristics or strong interrelationships.

Readers will also appreciate that, as referenced above, an LLM 514 generates a response 516 to a query 512 associated with the codebase 502. Readers will appreciate that in such embodiments, when the query 512 is initiated, the system taps into a knowledge graph that was constructed as described above which encapsulates the codebase 502. This knowledge graph, where nodes represent code elements, modules, or even communities, and edges denote the relationships between these entities, allows the system to extract highly relevant context to generate a response to the query 512.

The process begins by receiving the query 512 along with the existing chat history, ensuring that the full context of the conversation is captured. This historical context can be useful in resolving any ambiguity (or providing additional detail) in the query 512. In fact, the system may rephrase the query 512 with reference to the accumulated chat history, thereby enabling the system to refine and clarify the query 512, aligning it more precisely with the structural nuances of the knowledge graph and ensuring that the intent behind the query 512 is fully understood. The system subsequently employs an LLM to select the most appropriate agents or specialized modules tailored to address the query 512. These agents may perform a vector search on the knowledge graph, as the query 512 is converted into an embedding and compared against the embeddings of various code chunks, functions, or community nodes stored in the knowledge graph.

After the initial retrieval, the system can deepen the context by traversing the knowledge graph using predefined queries. For instance, if a retrieved node represents a function, the system may automatically fetch its associated function calls, related variables, or even surrounding code blocks to provide additional context. Similarly, when community nodes are identified, the system may retrieve high-level summaries and inter-community relationships that highlight the broader functional or architectural themes within the codebase. This layered retrieval process ensures that the context provided is both granular and holistic, reflecting both specific code elements and their wider dependencies. Finally, the rephrased question and the enriched contextual data extracted from the knowledge graph are supplied to the LLM 514. The LLM 514 may synthesize the provided information to generate a precise and context-aware response.

In some embodiments, a community detection algorithm (e.g., the Leiden algorithm) may be utilized to uncover natural groupings within the graphs described above (e.g., the DAGs generated). In some embodiments, communities may be identified at multiple levels of abstraction (e.g., flat clusters, nested structures within the code) to enable a multi-level understanding of the codebase 502. Once these hierarchical communities are detected, each community is encapsulated as a new node in the hierarchical representation 506 of the codebase 502. In some embodiments, summarizations may be generated that capture the characteristics and relationships of the community. The enriched hierarchical representation 506 of the codebase 502, now augmented with community nodes and their summaries, can be used by a GraphRAG (Graph Retrieval-Augmented Generation) system, users can perform semantic searches and obtain high-level answers about the codebase. For instance, queries regarding system architecture, module functionality, or dependency impact can be addressed by referencing the summarized community nodes.

As referenced above, the system described here includes an agentic architecture consisting of multiple agents. The multi-agent design may be structured around a modular framework where each specialized agent addresses distinct types of queries based on its unique skill set. Part of this design can include a manager module, which orchestrates the entire process. The manager may be responsible for selecting the most appropriate agent(s) based on the nature of the user's question and extracting necessary parameters (e.g., class name, function name), directly from the query. In the initial phase, the manager might delegate the task to a single specialized agent. In more complex scenarios, it can formulate a multi-agent plan, sequentially executing and reflecting on outputs to determine whether further processing is needed or if a final answer can be provided.

Although the embodiments described herein largely relate to using an LLM for modernizing a code, other generative models may be used as well (or alternatively). While LLMs are known for their extensive capabilities in generating coherent and contextually rich text, several alternative generative AI models offer distinct advantages based on specific application requirements and resource constraints. One straightforward alternative is a smaller language model (SLM) that, while possessing fewer parameters, can still perform many of the same tasks as an LLM. These models are typically more efficient in terms of memory and computation, allowing for faster inference and easier deployment in resource-constrained environments, though they may sometimes sacrifice the nuanced understanding and breadth of knowledge seen in larger models.

Likewise, sequence-to-sequence models with attention mechanisms represent another alternative. Although these models predate the transformer architectures typically used in LLMs, they remain effective for tasks such as translation, summarization, and question-answering when fine-tuned appropriately. Their relatively simpler architecture can sometimes offer advantages in terms of interpretability and ease of training on domain-specific data.

Furthermore, alternative generative architectures like Variational Autoencoders (VAEs) and Generative Adversarial Networks (GANs) have also been explored for text generation. While these models have traditionally been more prominent in image generation, adaptations have enabled them to produce text. They provide unique benefits such as enhanced control over the generation process and the ability to model complex distributions, which can be particularly useful in scenarios where creative or highly customized output is desired.

Although some embodiments describe providing input to generative AI models using prompts, in other embodiments input may be provided to a generative AI model in other ways. In some embodiments, input provided to the generative AI model is not limited to explicit user-generated prompts, and alternative forms of input may instead be leveraged. For instance, input could include structured data retrieved from databases, metadata from documents, user behavior signals (such as clickstreams or query history), or contextual information derived from sensors or IoT devices, data generated by other software applications, and so on. Inputs could also encompass content from previous interactions stored in chat histories, events or messages from other software applications communicated through APIs, or parameters dynamically determined based on system states or automated workflows. In still other embodiments, the generative AI model may receive input generated from one or more agents or intermediate systems, such as vector indexes or knowledge graphs, which can supplement or replace explicit prompts provided by a user.

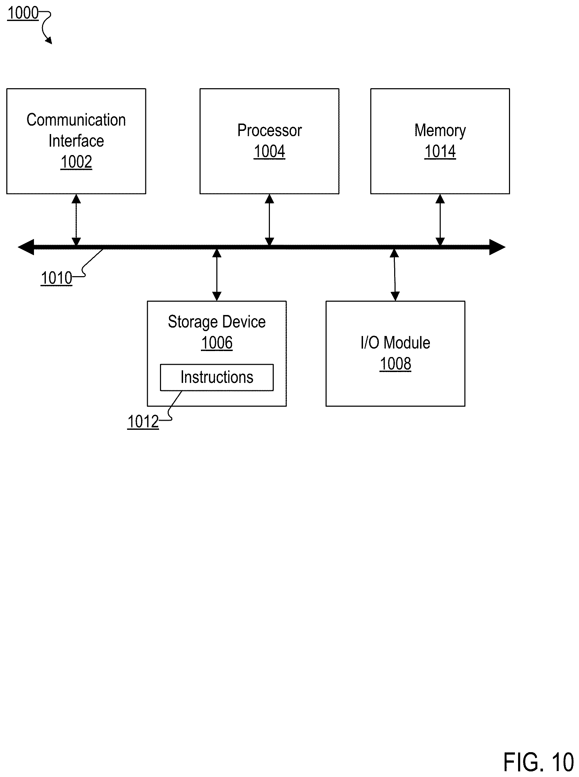

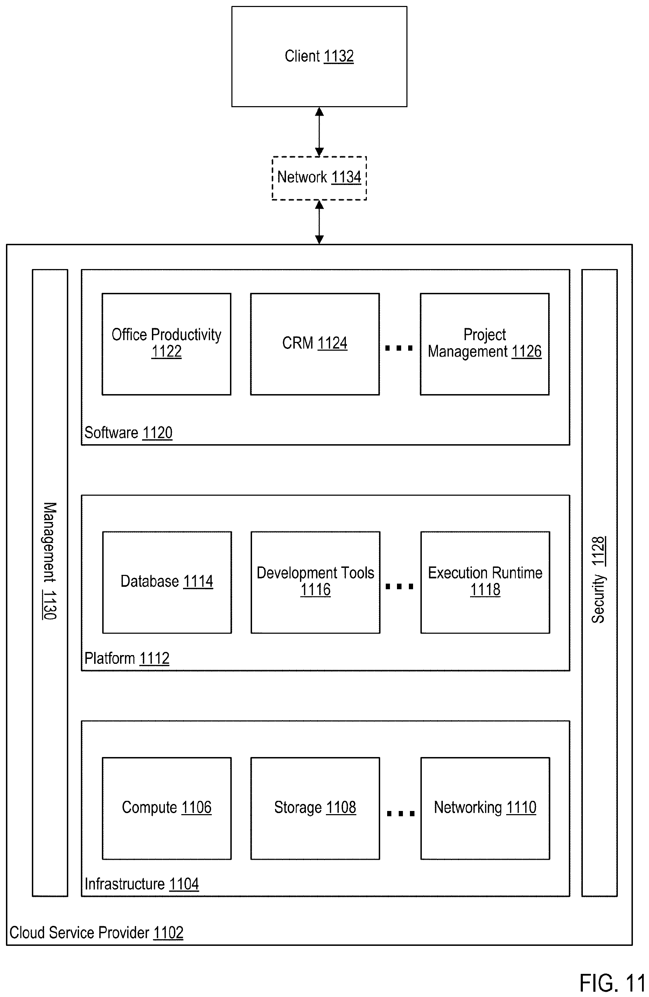

For further explanation, the sections included below provide some details regarding technologies that may be used to support leveraging an LLM for modernizing a codebase in accordance with some embodiments. For example, Fig. 10 sets forth an example of a computing device that may be used for some portion of securing an operating system in accordance with some embodiments. As an additional example of technologies that may be used to secure an operating system, Fig. 11 sets forth a block diagram of a cloud service provider 1102 service architecture in accordance with some embodiments of the present disclosure.

For further explanation, Fig. 10 illustrates an exemplary computing device 1000 that may be specifically configured to perform one or more of the processes described herein. As shown in Fig. 10, computing device 1000 may include a communication interface 1002, a processor 1004, a storage device 1006, an input/output (I/O) module 1008, and computer memory 1014 communicatively connected one to another via a communication infrastructure 1010. While an exemplary computing device 1000 is shown in Fig. 10, the components illustrated in Fig. 10 are not intended to be limiting. Additional or alternative components may be used in other embodiments. Components of computing device 1000 shown in Fig. 10 will now be described in additional detail.

Communication interface 1002 may be configured to communicate with one or more computing devices. Examples of communication interface 1002 include, without limitation, a wired network interface (such as a network interface card), a wireless network interface (such as a wireless network interface card), a modem, an audio/video connection, and any other suitable interface.

Processor 1004 generally represents any type or form of processing unit capable of processing data and/or interpreting, executing, and/or directing execution of one or more of the instructions, processes, and/or operations described herein. Processor 1004 may perform operations by executing computer-executable instructions 1012 (e.g., an application, software, code, and/or other executable data instance) stored in storage device 1006.

Storage device 1006 may include one or more data storage media, devices, or configurations and may employ any type, form, and combination of data storage media and/or device. For example, storage device 1006 may include, but is not limited to, any combination of non-volatile media and/or volatile media. Electronic data, including data described herein, may be temporarily and/or permanently stored in storage device 1006. For example, data representative of computer-executable instructions 1012 configured to direct processor 1004 to perform any of the operations described herein may be stored within storage device 1006. In some examples, data may be arranged in one or more databases residing within storage device 1006.

I/O module 1008 may include one or more I/O modules configured to receive user input and provide user output. I/O module 1008 may include any hardware, firmware, software, or combination thereof supportive of input and output capabilities. For example, I/O module 1008 may include hardware and/or software for capturing user input, including, but not limited to, a keyboard or keypad, a touchscreen component (e.g., touchscreen display), a receiver (e.g., an RF or infrared receiver), motion sensors, and/or one or more input buttons.

I/O module 1008 may include one or more devices for presenting output to a user, including, but not limited to, a graphics engine, a display (e.g., a display screen), one or more output drivers (e.g., display drivers), one or more audio speakers, and one or more audio drivers. In certain embodiments, I/O module 1008 is configured to provide graphical data to a display for presentation to a user. The graphical data may be representative of one or more graphical user interfaces and/or any other graphical content as may serve a particular implementation. In some examples, any of the systems, computing devices, and/or other components described herein may be implemented by computing device 1000.

For further explanation and as an additional example of a supporting technology for securing an operating system, Fig. 11 sets forth a block diagram of a cloud service provider service architecture in accordance with some embodiments. The cloud service provider 1102 can deliver a variety resources through a services-based consumption model where resources are consumed on-demand and as-a-service. Cloud service providers can provide services via cloud platforms such as, for example, Microsoft Azure^{™}, Amazon Web Services ('AWS')^{™}, Google Cloud Platform ('GCP')^{™}, and others. In Fig. 11, the cloud service provider 1102 is accessed from a client device 1134 via a network 1132.

Fig. 11 depicts an embodiment where software 1120 is delivered as a service. Software-as-a-service ('SaaS') is a model where software applications are delivered over the internet as-a-service. Rather than installing and maintaining software locally, users can access software via a web browser or other network connected interface, eliminating the need for complex software and hardware management on the client-side. In Fig. 11, as examples of software 1120 that can be delivered as-a-service, the illustrated embodiment includes office productivity 1122 software, customer relationship management ('CRM') 1124 software, and project management 1126 software. The office productivity 1122 software can include applications designed to facilitate common business and personal tasks, including word processing applications, applications for spreadsheet creation, presentation design applications, and many others. The CRM 1124 software can include applications for managing a business organization's relationships and interactions with customers and potential customers. The project management 1126 software can include applications designed to help teams plan, organize, and manage projects efficiently by facilitating collaboration and tracking the progress of projects. Readers will appreciate that in other embodiments, other types of software may be delivered using a SaaS model.

Fig. 11 depicts an embodiment where platforms 1112 can be delivered as a service. Platform-as-a-service ('PaaS') is a model that provides cloud customers with platform resources that they can use to develop, run, and manage applications without the complexity of such deploying and managing such infrastructure on their own. In Fig. 11, as examples of platform 1112 resources that can be delivered as-a-service, the illustrated embodiment includes database 1114 services, development tools 1116 services, and execution runtime 1118 services. The database 1114 services can be used to provide access to databases without management overhead for the user as the cloud service provider manages the provisioning, scaling, and maintenance of the databases. The development tools 1116 services can provide developers with tools to design, develop, test, and deploy applications without needing to manage the underlying infrastructure. The execution runtime 1118 services can provide environments where applications or other forms of computer program code can be executed, including services to scale the execution environment. Readers will appreciate that in other embodiments, other platform resources may be delivered using a PaaS model.

Fig. 11 depicts an embodiment where infrastructure 1104 can be delivered as a service. Infrastructure-as-a-Service ('IaaS') is a model that provides virtualized computing resources over the internet, such that infrastructure such as servers, storage, networks, and others may be leased on demand rather than purchasing and maintaining physical hardware. In Fig. 11, as examples of infrastructure 1104 resources that can be delivered as-a-service, the illustrated embodiment includes compute 1106 services, storage 1108 services, and networking 1110 services. The compute 1106 services can be used to provide on-demand access to computational resources such as VMs, containers, and serverless functions, where the cloud service provider manages the provisioning, scaling, and maintenance of such resources. The storage 1108 services can provide storage resources that can be used to store and access data, without the need for customers to purchase and manage on-premises physical storage resources. The networking 1110 services can provide the ability to create and manage virtualized networking resources such as, for example, virtual private networks ('VPNs'), firewalls, load balancers, and more. Readers will appreciate that in other embodiments, other infrastructure resources may be delivered using a PaaS model.

The cloud service provider of Fig. 11 also provides management 1130 resources. The management 1130 resources can include, for example, tools and interfaces that enable customers to efficiently deploy, monitor, and manage, their cloud services. Such tools can include web-based management consoles, command-line interfaces ('CLIs'), APIs, automation tools, and other tools.

The cloud service provider of Fig. 11 also provides security 1128 resources. The security 1128 resources can include, for example, tools and services to help customers protect their cloud environments and ensure compliance with security standards. These tools and services may provide specific aspects of security, including identity and access management, network security, threat detection, compliance management, and others.

Readers will appreciate that many of the components described above may be delivered as services from a cloud service provider. For example, the virtual machines, containers, and pods described above may all be delivered via a cloud service provider. In other embodiments, other forms of compute resources may be used in place of the virtual machines or other compute resource. For example, AWS EC2 instances or other form of cloud compute instances may be utilized in place of the virtual machines.

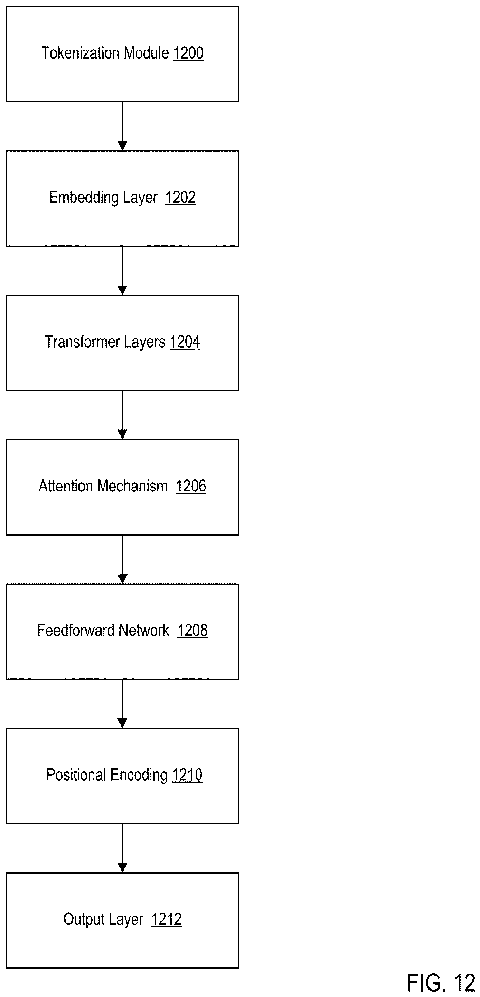

For further explanation. Fig. 12 sets forth a block diagram of an LLM in accordance with some embodiments of the present disclosure. The LLM of Fig. 12 may be embodied as a GPT-based neural network configured to process and generate text. The LLM may be implemented using one or more computing systems that include hardware and software components capable of executing machine learning models. The architecture shown in Fig. 12 may be utilized for various natural language processing (NLP) tasks, including but not limited to text generation, summarization, and translation.

As depicted in Fig. 12, the model may receive input text data, which is first processed by a tokenization module 1200. The tokenization module 1200 is configured to convert raw text into discrete tokens, which may correspond to words, subwords, or characters. The tokenized input is then passed to an embedding layer 1202, which may transform the tokens into numerical vector representations. These vector representations facilitate further processing by downstream layers of the model.

Following the embedding layer 1202, the token representations may be input into a series of transformer layers 1204. Each transformer layer 1204 may comprise multiple attention heads and feedforward subcomponents that enable the model to capture complex dependencies within the input text. The attention mechanism 1206 within the transformer layers 1204 may be responsible for assigning context-aware weights to different tokens, thereby allowing the model to focus on the most relevant parts of the input sequence when generating an output.

In addition to the attention mechanism 1206, each transformer layer 1204 may include a feedforward network 1208 configured to apply nonlinear transformations to the processed token representations. The feedforward network 1208 may enhance the model's ability to capture hierarchical and abstract linguistic structures.

In certain implementations, a positional encoding 1210 module may be incorporated to provide additional information about the relative positions of tokens within the input sequence. Since transformer architectures do not inherently process input text sequentially, positional encoding 1210 may be employed to preserve the order of words or subwords in the input.

After the sequence of transformer layers 1204 processes the input representations, the resulting encoded information is passed to an output layer 1212. The output layer 1212 may include a softmax activation function or other probabilistic modeling techniques to generate predictions for the next token or sequence of tokens in the output text. In some embodiments, the output layer 1212 may be used to determine the probability distribution over a vocabulary, thereby enabling the generation of coherent and contextually relevant text.

The architecture depicted in Fig. 12 is exemplary and may be modified to accommodate variations in the number of transformer layers 1204, attention mechanisms 1206, or embedding layers 1202. Additional optimizations, such as model pruning, parameter quantization, or integration with external knowledge sources, may also be implemented to enhance performance and efficiency.

Advantages and features of the present disclosure can be further described by the following statements:
1. A method of leveraging a large language model ('LLM') for modernizing a codebase, comprising: generating, using a codebase as input, a hierarchical representation of the codebase, wherein the hierarchical representation of the codebase includes one or more summarizations of functional units within the codebase and information describing relationships between the functional units within the codebase; and generating a searchable index that includes vector representations for nodes in the hierarchical representation of the codebase, wherein the LLM generates a response to a query based on content contained in the searchable index.
2. The method of any combination of one or more of the statements above further comprising: retrieving, from the searchable index, one or more entries that are most relevant to the query; and providing the one or more entries that are most relevant to the query to the LLM.
3. The method of any combination of one or more of the statements above further comprising generating a summarization of a functional unit within the codebase.
4. The method of any combination of one or more of the statements above, wherein multiple summarizations are generated for the functional unit within the codebase.
5. The method of any combination of one or more of the statements above, wherein generating the summarization of the functional unit within the codebase further comprises: ranking a plurality of nodes in the hierarchical representation; determining an edge weight for one or more edges between different nodes in the hierarchical representation; copying the plurality of nodes in the hierarchical representation to a directed acyclic graph (DAG), wherein one or more protected edges are added before one or more non-protected edges, and wherein the one or more protected edges include parent/child edges; sorting the plurality of edges based on the ranking; performing a topological sort on the DAG; and performing a bottom-up summarization of the DAG.
6. The method of any combination of one or more of the statements above further comprising associating, with a node in the hierarchical representation of the codebase, entries in multiple searchable indexes.
7. The method of any combination of one or more of the statements above further comprising selecting, from a plurality of agents, an agent to identify entries that are most relevant to the query, wherein each agent is configured to handle different query types.
8. The method of any combination of one or more of the statements above, wherein the information describing relationships between the functional units within the codebase includes information describing communities of nodes in the hierarchical representation of the codebase.
9. An apparatus for leveraging a generative artificial intelligence ('AI') model for modernizing a codebase, comprising: a memory; and one or more processing devices, operatively coupled to the memory, the one or more processing devices configured to: generate, using a codebase as input, a hierarchical representation of the codebase, wherein the hierarchical representation of the codebase includes one or more summarizations of functional units within the codebase and information describing relationships between the functional units within the codebase; and generate a searchable index that includes vector representations for nodes in the hierarchical representation of the codebase, wherein the generative AI model generates a response to a query based on content contained in the searchable index.
10. The apparatus of any combination of one or more of the statements above wherein the one or more processing devices are further configured to: retrieve, from the searchable index, one or more entries that are most relevant to the query; and provide the one or more entries that are most relevant to the query to the generative AI model.
11. The apparatus of any combination of one or more of the statements above wherein the one or more processing devices are further configured to generate a summarization of a functional unit within the codebase.
12. The apparatus of any combination of one or more of the statements above, wherein multiple summarizations are generated for the functional unit within the codebase.
13. The apparatus of any combination of one or more of the statements above, wherein, to generate the summarization of the functional unit within the codebase, the one or more processing devices are further configured to: rank a plurality of nodes in the hierarchical representation; determine an edge weight for one or more edges between different nodes in the hierarchical representation; copy the plurality of nodes in the hierarchical representation to a directed acyclic graph (DAG), wherein one or more protected edges are added before one or more non-protected edges, and wherein the one or more protected edges include parent/child edges; sort the plurality of edges based on the ranking; perform a topological sort on the DAG; and perform a bottom-up summarization of the DAG.
14. The apparatus of any combination of one or more of the statements above wherein the one or more processing devices are further configured to associate, with a node in the hierarchical representation of the codebase, entries in multiple searchable indexes.
15. The apparatus of any combination of one or more of the statements above wherein the one or more processing devices are further configured to select, from a plurality of agents, an agent to identify entries that are most relevant to the query, wherein each agent is configured to handle different query types.
16. The apparatus of any combination of one or more of the statements above, wherein the information describing relationships between the functional units within the codebase includes information describing communities of nodes in the hierarchical representation of the codebase.
17. A non-transitory computer readable storage medium for leveraging a generative artificial intelligence ('AI') model for modernizing a codebase, the non-transitory computer readable storage medium storing instructions which, when executed, cause a processing device to: generate, using a codebase as input, a hierarchical representation of the codebase, wherein the hierarchical representation of the codebase includes one or more summarizations of functional units within the codebase and information describing relationships between the functional units within the codebase; and generate a searchable index that includes vector representations for nodes in the hierarchical representation of the codebase, wherein the generative AI model generates a response to a query based on content contained in the searchable index.
18. The non-transitory computer readable storage medium of any combination of one or more of the statements above wherein the instructions, when executed, further cause the processing device to: retrieve, from the searchable index, one or more entries that are most relevant to the query; and provide the one or more entries that are most relevant to the query to the generative AI model.
19. The non-transitory computer readable storage medium of any combination of one or more of the statements above wherein the one or more processing devices are further configured to generate a summarization of a functional unit within the codebase.
20. The non-transitory computer readable storage medium of any combination of one or more of the statements above, wherein, to generate the summarization of the functional unit within the codebase, the processing device is further configured to: rank a plurality of nodes in the hierarchical representation; determine an edge weight for one or more edges between different nodes in the hierarchical representation; copy the plurality of nodes in the hierarchical representation to a directed acyclic graph (DAG), wherein one or more protected edges are added before one or more non-protected edges, and wherein the one or more protected edges include parent/child edges; sort the plurality of edges based on the ranking; perform a topological sort on the DAG; and perform a bottom-up summarization of the DAG.

Methods, apparatuses, and products for leveraging a large language model ('LLM') for modernizing a codebase, include: generating, using a codebase as input, a hierarchical representation of the codebase, wherein the hierarchical representation of the codebase includes one or more summarizations of functional units within the codebase and information describing relationships between the functional units within the codebase; and generating a searchable index that includes vector representations for nodes in the hierarchical representation of the codebase, wherein the LLM generates a response to a query based on content contained in the searchable index.

Although some embodiments are described largely in the context of a system, method, or in some other way, readers will recognize that embodiments of the present disclosure may also take the form of a computer program product disposed upon computer readable storage media for use with any suitable processing system. Such computer readable storage media may be any storage medium for machine-readable information, including magnetic media, optical media, solid-state media, or other suitable media. Examples of such media include magnetic disks in hard drives or diskettes, compact disks for optical drives, magnetic tape, and others as will occur to those of skill in the art. Persons skilled in the art will immediately recognize that any computer system having suitable programming means will be capable of executing the steps described herein as embodied in a computer program product. Persons skilled in the art will recognize also that, although some of the embodiments described in this specification are oriented to software installed and executing on computer hardware, nevertheless, alternative embodiments implemented as firmware or as hardware are well within the scope of the present disclosure.

Readers will appreciate that some embodiments are described in which computer program instructions are executed on computer hardware such as, for example, one or more computer processors. Readers will appreciate that in other embodiments, computer program instructions may be executed on virtualized computer hardware (e.g., one or more virtual machines), in one or more containers, in one or more cloud computing instances (e.g., one or more AWS EC2 instances), in one or more serverless compute instances offered such as those offered by a cloud service provider, in one or more event-driven compute services such as those offered by a cloud service provider, or in some other execution environment.

In some examples, a non-transitory computer-readable medium storing computer-readable instructions may be provided in accordance with the principles described herein. The instructions, when executed by a processor of a computing device, may direct the processor and/or computing device to perform one or more operations, including one or more of the operations described herein. Such instructions may be stored and/or transmitted using any of a variety of known computer-readable media.

A non-transitory computer-readable medium as referred to herein may include any non-transitory storage medium that participates in providing data (e.g., instructions) that may be read and/or executed by a computing device (e.g., by a processor of a computing device). For example, a non-transitory computer-readable medium may include, but is not limited to, any combination of non-volatile storage media and/or volatile storage media. Exemplary non-volatile storage media include, but are not limited to, read-only memory, flash memory, a solid-state drive, a magnetic storage device (e.g., a hard disk, a floppy disk, magnetic tape, etc.), ferroelectric random-access memory ("RAM"), and an optical disc (e.g., a compact disc, a digital video disc, a Blu-ray disc, etc.). Exemplary volatile storage media include, but are not limited to, RAM (e.g., dynamic RAM).

One or more embodiments may be described herein with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope of the claims. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality.

To the extent used, the flow diagram block boundaries and sequence could have been defined otherwise and still perform the certain significant functionality. Such alternate definitions of both functional building blocks and flow diagram blocks and sequences are thus within the scope of the claims. One of average skill in the art will also recognize that the functional building blocks, and other illustrative blocks, modules and components herein, can be implemented as illustrated or by discrete components, application specific integrated circuits, processors executing appropriate software and the like or any combination thereof.

While particular combinations of various functions and features of the one or more embodiments are expressly described herein, other combinations of these features and functions are likewise possible. The present disclosure is not limited by the particular examples disclosed herein and expressly incorporates these other combinations.

## Claims

1. A method of leveraging a large language model 'LLM' (514) for modernizing a codebase (502), comprising:
generating (504), using a codebase (502) as input, a hierarchical representation (506) of the codebase, wherein the hierarchical representation (506) of the codebase includes one or more summarizations of functional units within the codebase and information describing relationships between the functional units within the codebase; and
generating (508) a searchable index (510) that includes vector representations for nodes in the hierarchical representation (506) of the codebase, wherein the LLM (514) generates a response (516) to a query (512) based on content contained in the searchable index (510).

2. The method of claim 1 further comprising:
retrieving, from the searchable index, one or more entries that are most relevant to the query; and
providing the one or more entries that are most relevant to the query to the LLM.

3. The method of claim 1 or claim 2 further comprising generating a summarization of a functional unit within the codebase.

4. The method of claim 3, wherein multiple summarizations are generated for the functional unit within the codebase.

5. The method of claim 3 or claim 4, wherein generating the summarization of the functional unit within the codebase further comprises:
ranking a plurality of nodes in the hierarchical representation;
determining an edge weight for one or more edges between different nodes in the hierarchical representation;
copying the plurality of nodes in the hierarchical representation to a directed acyclic graph (DAG), wherein one or more protected edges are added before one or more non-protected edges, and wherein the one or more protected edges include parent/child edges;
sorting the plurality of edges based on the ranking;
performing a topological sort on the DAG; and
performing a bottom-up summarization of the DAG.

6. The method of any previous claim further comprising associating, with a node in the hierarchical representation of the codebase, entries in multiple searchable indexes.

7. The method of any previous claim further comprising selecting, from a plurality of agents, an agent to identify entries that are most relevant to the query, wherein each agent is configured to handle different query types.

8. The method of any previous claim, wherein the information describing relationships between the functional units within the codebase includes information describing communities of nodes in the hierarchical representation of the codebase.

9. An apparatus for leveraging a generative artificial intelligence 'AI' model for modernizing a codebase, comprising:
a memory (1014); and
one or more processing devices (1004), operatively coupled to the memory (1004), the one or more processing devices (1004) configured to:
generate (504), using a codebase (502) as input, a hierarchical representation (506) of the codebase, wherein the hierarchical representation (506) of the codebase includes one or more summarizations of functional units within the codebase and information describing relationships between the functional units within the codebase; and
generate (508) a searchable index (510) that includes vector representations for nodes in the hierarchical representation (506) of the codebase, wherein the generative AI model (514) generates a response (516) to a query (512) based on content contained in the searchable index (510).

10. The apparatus of claim 9 wherein the one or more processing devices are further configured to generate a summarization of a functional unit within the codebase.

11. The apparatus of claim 10, wherein, to generate the summarization of the functional unit within the codebase, the one or more processing devices are further configured to:
rank a plurality of nodes in the hierarchical representation;
determine an edge weight for one or more edges between different nodes in the hierarchical representation;
copy the plurality of nodes in the hierarchical representation to a directed acyclic graph (DAG), wherein one or more protected edges are added before one or more non-protected edges, and wherein the one or more protected edges include parent/child edges;
sort the plurality of edges based on the ranking;
perform a topological sort on the DAG; and
perform a bottom-up summarization of the DAG.

12. The apparatus of any of claims 9 to 11 wherein the one or more processing devices are further configured to associate, with a node in the hierarchical representation of the codebase, entries in multiple searchable indexes.

13. The apparatus of any of claims 9 to 12, wherein the information describing relationships between the functional units within the codebase includes information describing communities of nodes in the hierarchical representation of the codebase.

14. A non-transitory computer readable storage medium for leveraging a generative artificial intelligence 'AI' model for modernizing a codebase, the non-transitory computer readable storage medium storing instructions which, when executed, cause a processing device to:
generate (504), using a codebase (502) as input, a hierarchical representation (506) of the codebase, wherein the hierarchical representation (506) of the codebase includes one or more summarizations of functional units within the codebase and information describing relationships between the functional units within the codebase; and
generate (508) a searchable index (510) that includes vector representations for nodes in the hierarchical representation (506) of the codebase, wherein the generative AI model (514) generates a response (516) to a query (512) based on content contained in the searchable index (510).

15. The non-transitory computer readable storage medium of claim 14 wherein the one or more processing devices are further configured to generate a summarization of a functional unit within the codebase, wherein, to generate the summarization of the functional unit within the codebase, the processing device is further configured to:
rank a plurality of nodes in the hierarchical representation;
determine an edge weight for one or more edges between different nodes in the hierarchical representation;
copy the plurality of nodes in the hierarchical representation to a directed acyclic graph 'DAG', wherein one or more protected edges are added before one or more non-protected edges, and wherein the one or more protected edges include parent/child edges;
sort the plurality of edges based on the ranking;
perform a topological sort on the DAG; and
perform a bottom-up summarization of the DAG.
